# EUROPÄISCHE PATENTSCHRIFT

(11) **EP 1 693 233 B1**
(45) Veröffentlichungstag und Bekanntmachung des Hinweises auf die Patenterteilung: **22.04.2009**
(21) Anmeldenummer: 06101053.4
(22) Anmeldetag: 31.01.2006
(51) Int. Cl.: B60G 15/14, F16F 9/084

(54) **Luftfederbein mit zentrisch angeordnetem Dämpfer**
Air spring strut with centrally positioned damper
Jambe de ressort pneumatique avec amortisseur positionné centralement

(30) Priorität: 21.02.2005 DE 102005008126
(43) Veröffentlichungstag der Anmeldung: 23.08.2006
(73) Patentinhaber: Continental Aktiengesellschaft, 30165 Hannover (DE)
(72) Erfinder: Orlamünder, Ulrich, 30989, Gehrden (DE)

(56) Entgegenhaltungen:
- DE-A1- 19 753 637
- DE-A1- 19 826 480
- DE-C1- 19 508 980
- US-A- 4 398 704
- US-A- 4 555 096
- US-A- 6 116 584
- US-A1- 2003 127 781
- US-A1- 2004 140 600
- US-B1- 6 536 749
- PATENT ABSTRACTS OF JAPAN Bd. 010, Nr. 114 (M-473), 26. April 1986 (1986-04-26) & JP 60 241538 A (BRIDGESTONE KK), 30. November 1985 (1985-11-30)

## Beschreibung

Die Erfindung betrifft ein Luftfederbein mit einem zentrisch angeordnetem teleskopierbaren Dämpfer, wobei der Dämpfer im Wesentlichen aus einem Dämpfergehäuse mit einem innenliegenden Dämpfungskolben und einer an den Dämpfungskolben angebundenen Kolbenstange besteht, wobei das Luftfederbein zwischen Karosserie und Fahrwerk angeordnet ist und mindestens einen Rollbalg aufweist, der einerseits an einem Gehäuse und andererseits an einem in seiner äußeren Abrollkontur als rotationssymmetrischer Körper ausgebildeten Abrollkolben befestigt ist, wobei der Rollbalg und das Gehäuse einen mit Druckluft gefüllten Arbeitsraum umschließen, wobei das Gehäuse über ein elastisches Lager mit der Karosserie verbunden ist, wobei der Dämpfer einerseits über die Kolbenstange mit dem Gehäuse und andererseits über das Dämpfergehäuse mit dem Abrollkolben jeweils kraft- und/oder formschlüssig verbunden ist, und wobei der Rollbalg auf seiner Außen- und Unterseite durch ihn mindestens teilweise umgebende und ebenfalls mit dem Dämpfergehäuse verbundenen, rotationssymmetrische und mindestens teilweise flexible Wände geschützt ist, vorzugsweise durch Faltenbälge, und bei dem der Abrollkolben und das Dämpfergehäuse über zwei Anbindungen miteinander verbunden sind, wobei der Abrollkolben in seinem oberen Bereich über die erste Anbindung mit dem Dämpfergehäuse formschlüssig verbunden ist, wobei eine der Anbindungen zusätzlich eine dichtende Verbindung zwischen Dämpfergehäuse, Abrollkolben und den mit dem Rollbalg verbundenen, rotatiotissymmetrische und mindestens teilweise flexible Wänden bereitstellt, wobei die formschlüssige erste Anbindung als mit einer mit Durchströmungsöffnungen versehene Glocke so ausgebildet ist, dass sie im Wesentlichen axiale und in Richtung der Einfederung wirkende Fahrwerkskräfte auffängt.

Ein Luftfederbein dieser Art ist z.B. aus der DE 195 08 980 C1 bekannt. Bei diesem Luftfederbein weist das Gehäuse des Stoßdämpfers einen angeschweißten flanschartigen Kragen auf, an dem der Abrollkolben über einen anvulkanisierten elastischen Ring angebunden ist. Der elastische Ring ermöglicht zwar eine gewisse Taumelbeweglichkeit des Abrollkolbens der Luftfeder zum Gehäuse des Stoßdämpfers und infolgedessen eine Verschwenkbarkeit der Luftfeder gegenüber dem Stoßdämpfer, aufgrund der Konstruktion muß jedoch diese eine Anbindung sämtliche Fahrwerkskräfte auf das Dämpfergehäuse übertragen. Dadurch besteht eine hohe Belastung der Anbindung und sowohl Gehäuse, als auch Schweißnähte in diesem Bereich müssen entsprechen stabil und schwer ausgelegt sein. Leichtmetalle können daher im relativ engen vorgegebenen Einbauraum nur schwerlich zur Anwendung kommen und in aller Regel ist bei tatsächlich ausgeführten Konstruktionen von solchen Anbindungen das Dämpfergehäuse im Anbindungsbereich mit aufgeschweißten Verstärkungsringen oder aufgestauchten Verdickungen versehen.

Die US 2003/01 27 781 A1 offenbart eine Luftfederaufhängung für Fahrzeuge / eine Luftfederung, bei der ein Rollbalg auf einem Abrollkolben abrollen kann, der über zwei Anbindungen an ein Dämpfergehäuse angeschlossen ist, nämlich über eine obere Klemmverbindung und eine untere Anbindung, die mit einem Zwischenring den Abrollkolben an das Gehäuse anschließt. Erfindungswesentlich ist bei dieser Ausführung ein im oberen Bereich der Luftfederaufhängung angeordnetes Zusatzluftvolumen, welches mit Hilfe von Ventile beim Ein- und Ausfedern mit dem Hauptvolumen der Luftfeder verbunden oder von diesem abgetrennt werden kann. Die Ventile sind dabei durch die Bewegung des Federbeines schaltbar. Dadurch wird eine verbesserte Einstellbarkeit für unterschiedliche Straßenverhältnisse erreicht.

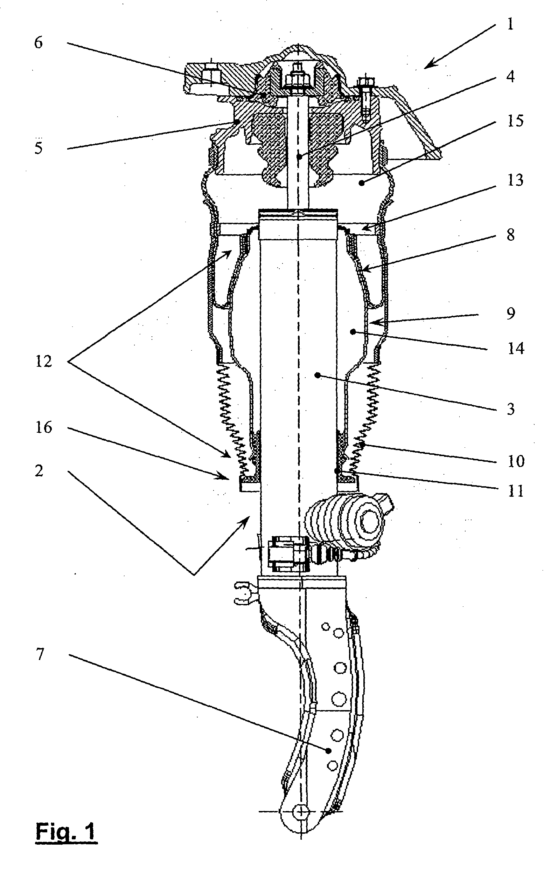

Die in den zugehörigen Figuren gezeigten Anbindungen zwischen Abrollkolben und Dämpferrohr sind nicht weiter spezifiziert oder mit besonderen Merkmalen versehen. Insbesondere die in der dortigen Fig. 1 erkennbaren Anbindungen des Abrollkolbens an das Dämpfergehäuse beinhalten beide so genannte feste Verbindungen, nämlich eine Klemmverbindung am oberen Rand des Abrollkolbens und eine über einen Metallring erfolgende Schweißverbindung am unteren Rand des Abrollkolbens, wonach im Sinne einer Überbestimmung beide Anbindungen sowohl axiale als auch radiale Kräfte auffangen müssen.

Für die Erfindung bestand also die Aufgabe, ein möglichst leicht bauendes Luftfederbein bereitzustellen, welches auch Querkräfte problemlos aufnehmen kann und somit radführende Eigenschaften besitzt, und bei welchem auf umfangreiche Bearbeitungen des Dämpfergehäuses, z.B. durch aufgeschweißte Verstärkungsringe oder Stauchprozesse zur bereichsweisen Verdickung, verzichtet werden kann.

Gelöst wird diese Aufgabe durch die Merkmale des Hauptanspruchs. Vorteilhafte Weiterbildungen sind durch die Merkmale der nachgeordneten Ansprüche offenbart.

Hierbei besteht die zweite Anbindung aus mindestens einem im unteren Bereich des Abrollkolbens dichtend zwischen Abrollkolben und Dämpfergehäuse auf dem Dämpfergehäuse geklemmten und den Abrollkolben am Dämpfergehäuse abstützenden Zwischenring, wobei die zweite Anbindung so ausgebildet ist, dass sie im wesentlichen radiale und senkrecht zur Richtung der Einfederung wirkende Fahrwerkskräfte auffängt und der Zwischenring durch Sicken oder Aufweitungen der umgebenden Bauteile in axialer Richtung fixiert ist. Und aus einem Werkstoff besteht, welcher im unteren und zur Anbindung des Faltenbalges vorgesehenen Bereich eine größere Härte aufweist als im dichtenden Klemmbereich zwischen Abrollkolben und Dämpfergehäuse.

Hierdurch erreicht man in einem speziell angepassten Bauteil eine sichere Dichtung ebenso wie eine genügende Formstabilität im Bereich der Anbindung des Faltenbalges. Ein solcher Zwischenring aus einem Werkstoff mit unterschiedlichen Härten könnte beispielsweise als Ring aus einem Verbundwerkstoff ausgeführt sein, als Aluminiumring unterschiedlicher Härte, oder als Gummiring mit Bereichen aus unterschiedlich hartem Gummi.

Hierdurch sind Abrollkolben und das Dämpfergehäuse über zwei Anbindungen miteinander verbunden, wobei eine erste Anbindung im Wesentlichen axiale und in Richtung der Einfederung wirkende Fahrwerkskräfte auffängt und eine zweite Anbindung im wesentlichen radiale und senkrecht zur Richtung der Einfederung wirkende Fahrwerkskräfte auffängt, und wobei eine der Anbindungen zusätzlich eine dichtende Verbindung zwischen Dämpfergehäuse, Abrollkolben, und den mit dem Rollbalg verbundenen, rotationssymmetrische und mindestens teilweise flexible Wänden bereitstellt.

Hierdurch wird zum einen eine Zusammenführung von Dichtfunktion und Abstützung der auf das Federbein einwirkenden Radialkräfte / Querkräfte erreicht, zum anderen ergibt sich durch die einhergehende Trennung der Abstützung der Axialkräfte und der Radialkräfte die Möglichkeit der leichteren Konstruktion insbesondere des Dämpfergehäuses / Dämpferrohres.

Einerseits ist der Abrollkolben in der ersten Anbindung mit seinem oberen Bereich am oberen Bereich des Dämpfergehäuses in Bezug auf die in Richtung der Einfederung wirkenden Fahrwerkskräfte fest verbunden. Andererseits ist der Abrollkolben in der zweiten Anbindung mit seinem unteren Bereich in einem nach unten von der ersten Anbindung beabstandeten Bereich des Dämpfergehäuses in Bezug auf die senkrecht zur Richtung der Einfederung wirkenden Fahrwerkskräfte mit dem Dämpfergehäuse fest verbunden. Dabei ist der Abrollkolben und die mit dem Rollbalg verbundenen, rotationssymmetrische und mindestens teilweise flexible Wänden durch die zweite Anbindung dichtend mit dem Dämpfergehäuse verbunden.

Hierdurch erreicht man radführende Eigenschaften durch die Abstützung eines hohen Kippmomentes, welches zudem durch den konstruktiv festzulegenden Abstand zwischen der ersten und zweiten Anbindungen eingestellt werden kann. Weiterhin ergibt sich durch eine solche Ausbildung eine leichte Anpassung an die herkömmlichen Bauarten von Federbeinen, bei denen die Rollbälge durch außen liegende Faltenbälge geschützt sind.

Der Abrollkolben ist in seinem oberen Bereich mit dem Dämpfergehäuse formschlüssig verbunden und stützt sich in seinem unteren Bereich lediglich über mindestens einen Zwischenring am Dämpfergehäuse ab. Eine solche Ausbildung ist konstruktiv sehr einfach und preiswert zu gestalten, insbesondere, wenn der Abrollkolben in seinem oberen Bereich mit einer mit Durchströmungsöffnungen versehenen Glocke mit dem Dämpfergehäuse formschlüssig verbunden ist.

Bei dieser Ausführung ist der Zwischenring auf das Dämpfergehäuse aufgeschoben oder aufgeklemmt und der Abrollkolben wird dadurch in seinem unteren Bereich form- oder kraftschlüssig mit der Außenseite des Zwischenringes verbunden. Hierdurch erreicht man eine einfache axial Fixierung des Zwischenringes, d.h. eine Sicherung gegen Verrutschen. Besonders einfach läßt sich die realisieren, wenn der Abrollkolben durch Einrollen oder Eindrücken einer Nut oder Krempe an seinem unteren Ende mit dem Zwischenring verbunden wird.

Eine weitere vorteilhafte Ausbildung besteht darin, dass der Zwischenring dichtend zwischen Abrollkolben und Dämpfergehäuse auf das Dämpfergehäuse geklemmt und durch eine zylindrische Aufweitung des Dämpfergehäuses unterhalb des Zwischenringes axial fixiert wird. Eine solche zylindrische Aufweitung läßt sich durch einfaches Einrollen oder Einprägen von mehreren Nasen / Aufweitungen während der Dämpferherstellung einbringen und so gestalten, dass der Zwischenring unter Dehnung einfach aufgeschoben werden kann.

Eine weitere vorteilhafte Ausbildung besteht darin, dass der Zwischenring dichtend zwischen Abrollkolben und Dämpfergehäuse auf das Dämpfergehäuse geklemmt und durch eine zylindrische Aufweitung des Dämpfergehäuses innerhalb des dichtenden Klemmbereiches axial fixiert wird. Eine solche Ausbildung ist dann besonders sinnvoll einsetzbar, wenn für den Zwischenring nur ein einziger Werkstoff verwendet wird und der Dichtbereich durch zusätzliche Pressung oder Klemmung gesichert werden soll. Auch hier läßt sich eine zylindrische Aufweitung des Dämpferrohres / Dämpfergehäuses durch einfaches Einrollen oder Einprägen von Nasen / Aufweitungen während der Dämpferherstellung einbringen und so gestalten, dass der Zwischenring unter Pressung einfach zwischen Abrollkolben und Dämpfergehäuse geschoben werden kann.

Eine weitere vorteilhafte Ausbildung besteht darin, dass der Zwischenring dichtend zwischen Abrollkolben und Dämpfergehäuse auf das Dämpfergehäuse geklemmt und durch eine zylindrische Sicke des Abrollkolbens zwischen dichtendem Klemmbereich und dem unteren und zur Anbindung des Faltenbalges vorgesehenen Bereich axial fixiert wird. Hierdurch entfällt im Grunde sämtliche zusätzlich und für die Anbindung vorbereitende Bearbeitung des Dämpferrohres, was natürlich dessen Herstellung wesentlich vereinfacht und kostengünstiger planen läßt. Eine solche Sicke kann zudem mit ihren Flanken so gestaltet sein, dass ein Aufschieben des Abrollkolbens auf den bereits auf das Dämpferrohr geklemmten Zwischenring erleichtert wird.

Allen Ausbildungen, bei denen der Zwischenring auf das Dämpfergehäuse aufgeschoben oder aufgeklemmt wird und mit im Dämpferrohr oder im Abrollkolben befindlichen Sicken, zylindrisch eingerollten Aufweitungen, etc. axial gesichert wird, liegt als übergreifender Vorteil zugrunde, dass die gesamte Konstruktion des Luftfederbeines wesentlich leichter wird, da auf angeschweißte Verstärkungsringe / Adapterhülsen oder angestauchte Verdickungen im Verbindungsbereich des Dämpfergehäuses verzichtet werden kann. Die Gewichtsreduktion kann hier bis zu 15 % betragen.

Eine weitere vorteilhafte Ausbildung besteht darin, dass Zwischenring an seinem oberen und zum Arbeitsraum weisenden Ende selbstdichtend ausgeführt ist, vorzugsweise mit einer V-förmigen und zum Arbeitsraum geöffneten Umfangsnut versehen ist. Eine solche, an sich bekannte Ausführung ergibt in Kombination mit den übrigen Merkmalen in Synergie die Besonderheit, dass nicht nur die Dichtfunktion optimiert, sondern auch die Klemmung des Zwischenringes unterstützt wird.

Eine weitere vorteilhafte Ausbildung besteht darin, dass das Dämpfergehäuse aus Aluminium besteht. Hierdurch ergibt sich eine weitere gravierende Gewichtseinsparung, die unter Berücksichtigung der Wechselbeziehung zwischen Einbauraum (Package) und Festigkeit im Bereich der zweiten Anbindung erst durch die erfindungsgemäße Lösung erreichbar ist. Erst bei dieser Lösung ergibt sich nämlich durch die Trennung der Abstützung der Axialkräfte (erste Anbindung) und der Radialkräfte (zweite Anbibdung) die Möglichkeit der leichteren Konstruktion insbesondere des Dämpfergehäuses / Dämpferrohres.

Eine weitere vorteilhafte Ausbildung besteht darin, dass das Dämpfergehäuse im Bereich des Zwischenringes einen eingelegten Stützring aufweist, vorzugsweise aus Stahl. Hierdurch kann z. B bei einer insgesamt auf Leichtbau ausgelegten Aluminiumkonstruktion des Dämpferrohres lediglich im Bereich der zweiten Anbindung auf einfache Weise eine Verstärkung des Dämpferrohres bewirkt werden.

Anhand eines Ausführungsbeispieles soll die Erfindung näher erläutert werden. Es zeigen:
- Fig. 1: eine Übersichtszeichnung eines erfindungsgemäßen Luftfederbeins
- Fig. 2: eine Übersichtszeichnung eines im Stand der Technik üblichen Luftfederbeins
- Fig. 3 bis 6: erfindungsgemäße Ausführungen der Verbindung zwischen Abrollkolben und Dämpfergehäuse

Die Fig. 1 stellt eine Übersichtszeichnung eines erfindungsgemäßen Luftfederbeins 1 dar. Das Luftfederbein weist einen zentrisch angeordneten teleskopierbaren Dämpfer 2 auf, wobei der Dämpfer 2 im Wesentlichen aus einem Dämpfergehäuse 3 aus Aluminium mit einem hier nicht näher dargestellten innenliegenden Dämpfungskolben und einer an den Dämpfungskolben angebundenen Kolbenstange 4 besteht.

Das Luftfederbein ist zwischen Karosserie und Fahrwerk angeordnet und ist hierzu mit seinem oberen Gehäuse 5 über ein elastisches Lager 6 mit der hier nicht näher dargestellten Karosserie verbunden, während die Anbindung an das hier ebenfalls nicht näher dargestellte Fahrwerk über die Gabel 7 erfolgt.

Das Luftfederbein weist einen Rollbalg 8, der einerseits an einem Gehäuse 5 und andererseits an einem in seiner äußeren Abrollkontur als rotationssymmetrischer Körper ausgebildeten Abrollkolben 9 befestigt ist, wobei der Rollbalg 8 und das Gehäuse 5 einen mit Druckluft gefüllten Arbeitsraum umschließen.

Der Dämpfer ist einerseits über die Kolbenstange 4 mit dem Gehäuse 5 und andererseits und vorzugsweise über das Dämpfergehäuse 3 mit dem Abrollkolben 9 jeweils kraft- und/oder formschlüssig verbunden. Der Rollbalg 8 weist auf seiner Außen- und Unterseite einen Faltenbalg 10 auf, wobei der Faltenbalg nur in seinem unteren Bereich mit Falten ausgebildet ist und mit seinem oberen Bereich den Rollbalg kragenförmig umgibt. Der Faltenbalg ist über den Zwischenring 11 mit dem Dämpfergehäuse 3 verbundenen.

Der Abrollkolben 9 und das Dämpfergehäuse 3 sind bei dem erfindungsgemäßen Luftfederbein über zwei Anbindungen 12 miteinander verbunden. Dabei fängt die glockenförmig ausgebildete und mit Durchströmungsöffnungen versehenen erste Anbindung 13 im Wesentlichen axiale und in Richtung der Einfederung / bzw. der Achse des Luftfederbeins wirkende Fahrwerkskräfte auf. Die Durchströmungsöffnungen sind erforderlich, um eine den Ringraum 14 mit dem Arbeitsraum 15 zu verbinden.

Die durch den zwischen Abrollkolben 9 und Dämpfergehäuse 3 geklemmten Zwischenring 11 bereitgestellte zweite Anbindung 16 fängt im wesentlichen radiale und senkrecht zur Richtung der Einfederung wirkende Fahrwerkskräfte auf und sichert zusätzlich eine dichtende Verbindung zwischen Dämpfergehäuse 3 , Abrollkolben 9, und den mit dem Rollbalg 8 verbundenen Faltenbalg 10.

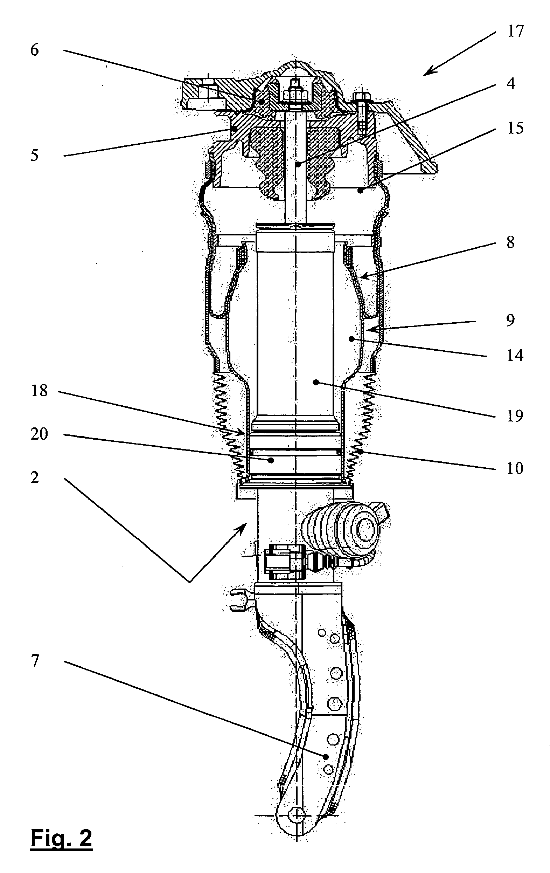

Die Fig. 2 zeigt eine Übersichtszeichung eines entsprechenden und im Stand der Technik bekannten Luftfederbeins 17, welches sich von der erfindungsgemäßen Lösung insbesondere dadurch unterscheidet, dass nur eine Anbindung 18 zwischen Abrollkolben 9 und Dämpfergehäuse 19 existiert. Diese eine Anbindung muß hier axiale und radiale Fahrwerkskräfte aufnehmen, ist hochbelastet, und ist aus diesem Grunde als schwerer und mit verschiedenen Umfangsnuten versehener auf das Stahl hergestellte Dämpfergehäuse 19 aufgeschweißter Stahlring 20 ausgebildet, welcher das Gewicht des Luftfederbeins um 1,2 Kg erhöht. Bei vier Federbeinen sind dies nahezu 5 Kg pro Fahrzeug und damit bereits ein Gewichtszusatz, der erheblich ist.

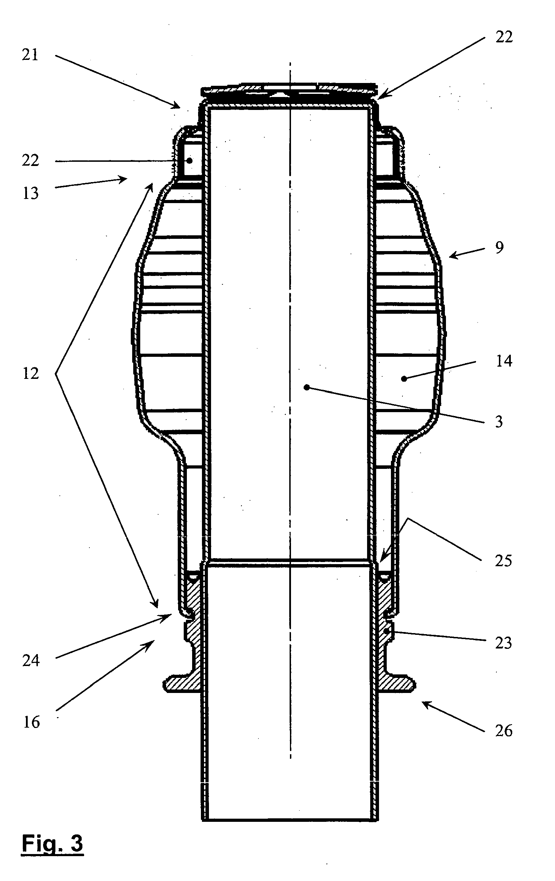

Fig. 3 zeigt als Teilzusammenbau eine erste vorteilhafte erfindungsgemäße Ausführung der aus zwei Anbindungen 13 und 16 bestehenden Verbindung 12 zwischen dem Abrollkolben 9 und dem Dämpfergehäuse 3. Hierbei ist der Abrollkolben 9 in seinem oberen Bereich mit einer mit Durchströmungsöffnungen 21 versehenen Glocke 22 mit dem Dämpfergehäuse 3 formschlüssig verbunden.

Ein Zwischenring 23 ist auf das Dämpfergehäuse 3 aufgeklemmt. Der Abrollkolben 9 ist in seinem unteren Bereich mittels einer umlaufenden und in eine auf der Außenseite des Zwischenringes 23 befindliche Nut eingreifende Einschnürung / Krempe 24 formschlüssig mit der Außenseite des Zwischenringes 23 verbunden. Hierdurch erreicht man eine einfache axial Fixierung des Zwischenringes 23.

Der Zwischenring 23 ist an seinem oberen und zum Arbeitsraum weisenden Ende mit einer V-förmigen Umfangsnut 25 versehen, die zum Ringraum 14 geöffnet ist, welcher wiederum über die Durchströmungsöffnungen 21 mit dem Arbeitsraum 15 verbundenen ist und damit unter Luftfeder-Arbeitsdruck steht. Hierdurch ergibt einerseits eine selbstdichtende Funktion des Zwischenringes und andererseits eine verstärkte Klemmung zwischen dem Abrollkolben 9 und dem Dämpfergehäuse 3.

Der Zwischenring 23 weist an seinem unteren und zum Fahrwerk weisenden Ende einen über den Umfang segmentiert vorspringenden Flansch 26 auf, an welchem der Faltenbalg 10 über Klemm- oder Schnappverbindungen angeschlossen werden kann.

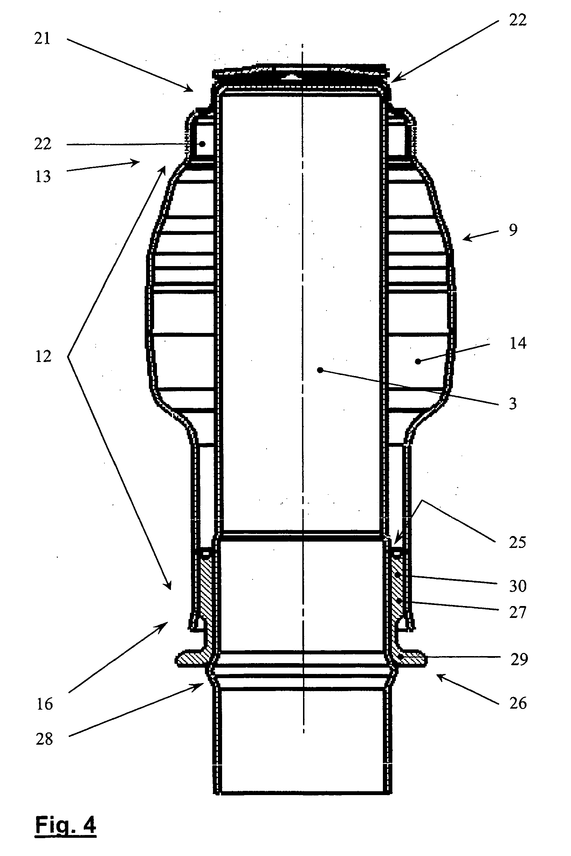

Fig. 4 zeigt als Teilzusammenbau eine zweite vorteilhafte erfindungsgemäße Ausführung, bei welcher ein Zwischenring 27 dichtend zwischen Abrollkolben 9 und Dämpfergehäuse 3 auf das Dämpfergehäuse geklemmt ist. Der Zwischenring 27 wird hier durch eine zylindrische Aufweitung 28 über den Umfang des Dämpfergehäuses 3 axial fixiert, wobei die Aufweitung 28 sich unterhalb des Zwischenringes 27 befindet. Der Zwischenring 27 besteht bei dieser Ausführung aus einem Kautschukwerkstoff, welcher im unteren und zur Anbindung des Faltenbalges vorgesehenen Bereich 29 eine wesentlich größere Härte aufweist als im dichtenden Klemmbereich 30 zwischen Abrollkolben 9 und Dämpfergehäuse 3.

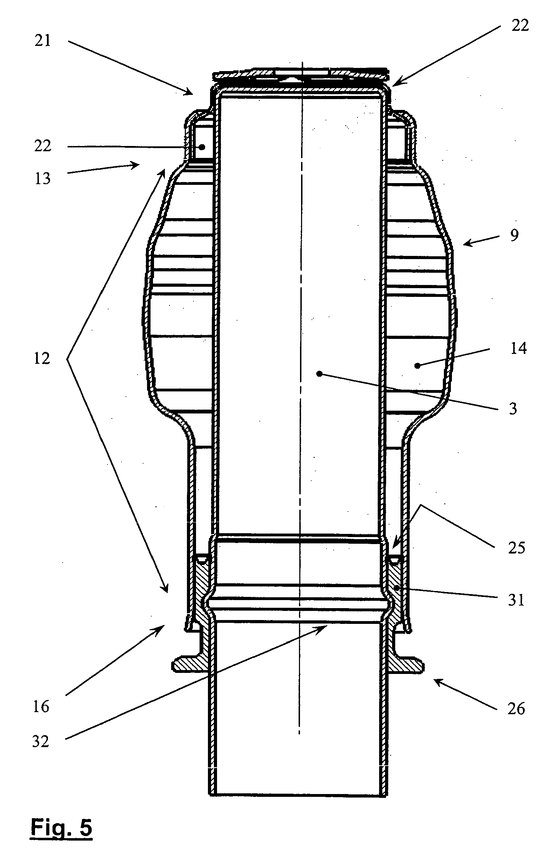

Fig. 5 zeigt als Teilzusammenbau eine dritte vorteilhafte erfindungsgemäße Ausführung, bei welcher ein Zwischenring 31 dichtend zwischen Abrollkolben 9 und Dämpfergehäuse 3 auf das Dämpfergehäuse geklemmt ist. Der Zwischenring 31 wird hier durch eine zylindrische Aufweitung 32 über den Umfang des Dämpfergehäuses 3 axial fixiert, wobei die Aufweitung 32 sich innerhalb des dichtenden Klemmbereiches des Zwischenringes 31 befindet. Eine solche Ausbildung ist, wie bereits dargestellt, dann besonders sinnvoll einsetzbar, wenn für den Zwischenring nur ein einziger Werkstoff verwendet wird und der Dichtbereich durch zusätzliche Pressung oder Klemmung gesichert werden soll.

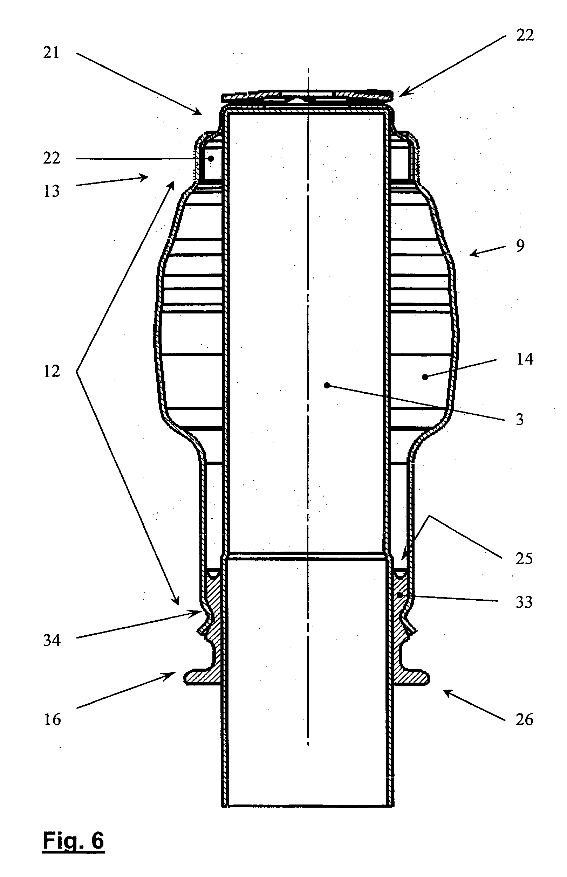

Fig. 6 zeigt schließlich den Teilzusammenbau einer vierten vorteilhaften erfindungsgemäßen Ausführung, welche aufgrund ihrer Einfachheit besonders bevorzugt ist. Auch bei dieser Ausführung ist wieder ein Zwischenring 33 dichtend zwischen Abrollkolben 9 und Dämpfergehäuse 3 auf das Dämpfergehäuse geklemmt ist. Der Zwischenring 33 wird hier durch eine zylindrische Sicke 34 im unteren Bereich des Abrollkolbens 9 über den Umfang axial fixiert. Die zylindrische Sicke 34 ist hierbei zwischen dem dichtendem Klemmbereich des Zwischenringes 33 und dem unteren und zur Anbindung des Faltenbalges vorgesehenen Bereich 26 angeordnet. Die Sicke ist mit ihren Flanken so gestaltet sein, dass ein Aufschieben des Abrollkolbens 9 auf den bereits auf das Dämpferrohr geklemmten Zwischenring 33 erleichtert wird.

### Bezugszeichenliste

### (Teil der Beschreibung)

- 1: Luftfederbein
- 2: Dämpfer
- 3: Dämpfergehäuse
- 4: Kolbenstange
- 5: Gehäuse (Luftfederbein)
- 6: Elastisches Lager
- 7: Gabel zum Anschluß an das Fahrwerk
- 8: Rollbalg
- 9: Abrollkolben
- 10: Faltenbalg
- 11: Zwischenring
- 12: Verbindung
- 13: Anbindung
- 14: Ringraum
- 15: Arbeitsraum
- 16: Anbindung
- 17: Luftfederbein
- 18: Anbindung
- 19: Dämpfergehäuse
- 20: Stahlring
- 21: Durchströmungsöffnung
- 22: Glocke zur Anbindung des Abrollkolbens
- 23: Zwischenring
- 24: Einschnürung
- 25: V-förmige Umfangsnut
- 26: Flansch
- 27: Zwischenring
- 28: Zylindrische Aufweitung
- 29: Bereich des Zwischenringes zur Anbindung des Faltenbalges
- 30: Dichtender Klemmbereich des Zwischenringes
- 31: Zwischenring
- 32: Zylindrische Aufweitung
- 33: Zwischenring
- 34: Sicke

## Patentansprüche

1. Luftfederbein mit einem zentrisch angeordnetem teleskopierbaren Dämpfer, wobei der Dämpfer im Wesentlichen aus einem Dämpfergehäuse (3) mit einem innenliegenden Dämpfungskolben und einer an den Dämpfungskolben angebundenen Kolbenstange (4) besteht, wobei das Luftfederbein zwischen Karosserie und Fahrwerk angeordnet ist und mindestens einen Rollbalg (8) aufweist, der einerseits an einem Gehäuse (5) und andererseits an einem in seiner äußeren Abrollkontur als rotationssymmetrischer Körper ausgebildeten Abrollkolben (9) befestigt ist, wobei der Rollbalg und das Gehäuse einen mit Druckluft gefüllten Arbeitsraum (15) umschließen, wobei das Gehäuse (5) über ein elastisches Lager (6) mit der Karosserie verbunden ist, wobei der Dämpfer einerseits über die Kolbenstange (4) mit dem Gehäuse (5) und andererseits über das Dämpfergehäuse(3) mit dem Abrollkolben jeweils kraft- und/oder formschlüssig verbunden ist, und wobei der Rollbalg (8) auf seiner Außen- und Unterseite durch ihn mindestens teilweise umgebende und ebenfalls mit dem Dämpfergehäuse verbundenen, rotationssymmetrische und mindestens teilweise flexible Wände (10) geschützt ist, vorzugsweise durch Faltenbälge, und bei dem der Abrollkolben (9) und das Dämpfergehäuse (3) über zwei Anbindungen (13, 16) miteinander verbunden sind, wobei der Abrollkolben (9) in seinem oberen Bereich über die erste Anbindung (13) mit dem Dämpfergehäuse formschlüssig verbunden ist, wobei eine der Anbindungen zusätzlich eine dichtende Verbindung zwischen Dämpfergehäuse (3), Abrollkolben(9) und den mit dem Rollbalg (8) verbundenen, rotationssymmetrische und mindestens teilweise flexible Wänden (10) bereitstellt, wobei die formschlüssige erste Anbindung (13) als mit einer mit Durchströmungsöffnungen (21) versehene Glocke (22) so ausgebildet ist, dass sie im Wesentlichen axiale und in Richtung der Einfederung wirkende Fahrwerkskräfte auffängt, **dadurch gekennzeichnet, dass** die zweite Anbindung (16) aus mindestens einem im unteren Bereich des Abrollkolbens dichtend zwischen Abrollkolben (9) und Dämpfergehäuse (3) auf dem Dämpfergehäuse geklemmten und den Abrollkolben am Dämpfergehäuse (3) abstützenden Zwischenring (11, 23, 27, 31, 33) besteht und so ausgebildet ist, dass sie radiale und senkrecht zur Richtung der Einfederung wirkende Fahrwerkskräfte auffängt und wobei der Zwischenring (23, 27,31,33) durch Sicken oder Aufweitungen der umgebenden Bauteile in axialer Richtung fixiert ist und aus einem Werkstoff besteht, welcher im unteren und zur Anbindung des Faltenbalges vorgesehenen Bereich eine größere Härte aufweist als im dichtenden Klemmbereich zwischen Abrollkolben (9) und Dämpfergehäuse (3).

2. Luftfederbein nach Anspruch 1, **dadurch gekennzeichnet, dass** der Abrollkolben (9) und die mit dem Rollbalg (8) verbundenen, rotationssymmetrische und mindestens teilweise flexible Wänden durch die zweite Anbindung (16) dichtend mit dem Dämpfergehäuse verbunden sind.

3. Luftfederbein nach Anspruch 1 oder 2, **dadurch gekennzeichnet, dass** der Zwischenring auf das Dämpfergehäuse aufgeschoben oder aufgeklemmt wird und der Abrollkolben in seinem unteren Bereich form- oder kraftschlüssig mit der Außenseite des Zwischenringes verbunden wird.

4. Luftfederbein nach Anspruch 3, **dadurch gekennzeichnet, dass** der Abrollkolben durch Einrollen oder Eindrücken einer Einschnürung (24) an seinem unteren Ende mit dem Zwischenring (23) verbunden wird.

5. Luftfederbein nach Anspruch 1 bis 4, **dadurch gekennzeichnet, dass** der Zwischenring durch eine zylindrische Aufweitung (28) des Dämpfergehäuses (3) unterhalb des Zwischenringes (27) axial fixiert ist.

6. Luftfederbein nach Anspruch 1 bis 5, **dadurch gekennzeichnet, dass** der Zwischenring (31) dichtend zwischen Abrollkolben (9) und Dämpfergehäuse (3) auf das Dämpfergehäuse geklemmt und durch eine zylindrische Aufweitung (32) des Dämpfergehäuses (3) innerhalb des dichtenden Klemmbereiches axial fixiert wird.

7. Luftfederbein nach Anspruch 1 bis 5, **dadurch gekennzeichnet, dass** der Zwischenring (33) dichtend zwischen Abrollkolben (9) und Dämpfergehäuse (3) auf das Dämpfergehause geklemmt und durch eine zylindrische Sicke (34) des Abrollkolbens zwischen dichtendem Klemmbereich und dem unteren und zur Anbindung des Faltenbalges vorgesehenen Bereich axial fixiert wird.

8. Luftfederbein nach Anspruch 1 bis 7, **dadurch gekennzeichnet, dass** Zwischenring an seinem oberen und zum Arbeitsraum weisenden Ende selbstdichtend ausgeführt ist, vorzugsweise mit einer V-förmigen und zum Arbeitsraum geöffneten Umfangsnut (25) versehen ist.

9. Luftfederbein nach Anspruch 1 bis 8, **dadurch gekennzeichnet, dass** das Dämpfergehäuse aus Aluminium besteht.

10. Luftfederbein nach Anspruch 9, **dadurch gekennzeichnet, dass** das Dämpfergehäuse im Bereich des Zwischenringes einen eingelegten Stützring aufweist, vorzugsweise aus Stahl.

## Claims

1. Air spring strut with a centrally positioned, telescopic damper, wherein the damper is composed essentially of a damper housing (3) with an internal damper piston and a piston rod (4) which is connected to the damping piston, wherein the air spring strut is arranged between the vehicle body and the chassis and has at least one rolling bellows (8) which is attached on one side to a housing (5) and on the other side to a rolling piston (9) which is embodied as a rotationally symmetrical body in its external rolling contour,
wherein the rolling bellows and the housing enclose a working space (15) which is filled with compressed air, wherein the housing (5) is connected to the vehicle body via an elastic bearing (6), wherein the damper is connected on one side to the housing (5) via the piston rod (4) and on the other side to the rolling bellows via the damper housing (3), in each case in a frictionally and/or positively locking fashion, and
wherein the rolling bellows (8) is protected on its outer side and under side by rotationally symmetrical and at least partially flexible walls (10), preferably folding bellows, which surround it at least partially and are also connected to the damper housing, and in which the rolling piston (9) and the damper housing (3) are connected to one another via two connections (13, 16), wherein the rolling piston (9) is connected in its upper region to the damper housing in a positively locking fashion via the first connection (13), wherein one of the connections additionally provides a sealed connection between the damper housing (3), rolling piston (9) and the rotationally symmetrical and at least partially flexible walls (10) which are connected to the rolling bellows (8),
wherein the positively locking first connection (13) is embodied as a bell (22) provided with through-flow openings (21) in such a way that it absorbs essentially axial chassis forces acting in the direction of the spring compression, **characterized in that** the second connection (16) is composed of at least one intermediate ring (11, 23, 27, 31, 33) which is clamped on the damper housing in the lower region of the rolling piston in such a way as to form a seal between the rolling piston (9) and the damper housing (3), and supports the rolling piston on the damper housing (3) and is embodied in such a way that it absorbs radial chassis forces acting perpendicularly with respect to the direction of the spring compression, and wherein the intermediate ring (23, 27, 31, 33) is secured by beads or widened portions of the surrounding components in the axial direction and is composed of a material which has a higher degree of hardness in the lower region, provided for connecting the folding bellows, than in the clamping region which forms a seal between the rolling piston (9) and damper housing (3).

2. Air spring strut according to Claim 1, **characterized in that** the rolling piston (9) and the rotationally symmetrical and at least partially flexible walls which are connected to the rolling bellows (8) are connected so as to form a seal with the damper housing via the second connection (16).

3. Air spring strut according to Claim 1 or 2, **characterized in that** the intermediate ring is fitted or clamped onto the damper housing, and the rolling piston is connected, in its lower region, to the outside of the intermediate ring in a positively or frictionally locking fashion.

4. Air spring strut according to Claim 3, **characterized in that** the rolling piston is connected to the intermediate ring (23) by rolling in or pressing in a constriction (24) at its lower end.

5. Air spring strut according to Claims 1 to 4, **characterized in that** the intermediate ring is secured axially underneath the intermediate ring (27) by cylindrical widened portion (28) of the damper housing (3).

6. Air spring strut according to Claims 1 to 5, **characterized in that** the intermediate ring (31) is clamped on the damper housing so as to form a seal between the rolling piston (9) and damper housing (3) and is secured axially by a cylindrical widened portion (32) of the damper housing (3) within the seal-forming clamping region.

7. Air spring strut according to Claims 1 to 5, **characterized in that** the intermediate ring (33) is clamped on the damper housing so as to form a seal between the rolling piston (9) and damper housing (3) and is secured axially by a cylindrical bead (34) of the rolling piston between the clamping region which forms a seal and the lower region which is provided to connect the folding bellows.

8. Air spring strut according to Claims 1 to 7, **characterized in that** the intermediate ring is embodied in a self-sealing fashion at its upper end which points to the working space, and is preferably provided with a V-shaped circumferential groove (25) which is open to the working space.

9. Air spring strut according to Claims 1 to 8, **characterized in that** the damper housing is composed of aluminium.

10. Air spring strut according to Claim 9, **characterized in that** the damper housing has an inserted supporting ring, preferably made of steel, in the region of the intermediate ring.

## Revendications

1. Jambe d'amortisseur pneumatique au centre de laquelle est disposé un amortisseur télescopique,
l'amortisseur étant constitué essentiellement d'un boîtier d'amortisseur (3) qui présente un piston intérieur d'amortissement et d'une tige de piston (4) reliée au piston d'amortissement,
la jambe d'amortisseur pneumatique étant disposée entre la carrosserie et le train de roulement et présentant au moins un soufflet déroulant (8) fixé d'une part à un boîtier (5) et d'autre part à un piston déroulant (9) configuré comme corps à symétrie de rotation disposé sur son contour extérieur de déroulement,
le soufflet déroulant et le boîtier entourant une chambre de travail (15) remplie d'air sous pression,
le boîtier (5) étant relié à la carrosserie par un palier élastique (6),
l'amortisseur étant relié en correspondance mécanique et/ou en correspondance géométrique d'une part au boîtier (5) par la tige de piston (4) et d'autre part au piston déroulant par le boîtier d'amortisseur (3),
le côté extérieur et le côté inférieur du soufflet déroulant (8) étant protégés par des parois (10) à symétrie de rotation et au moins partiellement flexibles qui l'entourent au moins en partie et également reliées au boîtier d'amortisseur (3), de préférence par des soufflets en accordéon,
le piston déroulant (9) et le boîtier d'amortisseur (3) étant reliés l'un à l'autre par deux liaisons (13, 16),
la partie supérieure du piston déroulant (9) étant reliée en correspondance géométrique au boîtier d'amortisseur par la première liaison (13),
l'une des liaisons constituant de plus une liaison étanche entre le boîtier d'amortisseur (3), le piston déroulant (9) et les parois (10) à symétrie de rotation et au moins partiellement flexibles reliées au soufflet déroulant (8),
la première liaison (13) en correspondance géométrique étant configurée en cloche (22) dotée d'ouvertures d'écoulement (21) et reprenant les forces essentiellement axiales exercées par le train de roulement dans la direction de l'amortissement,
**caractérisée en ce que**
la deuxième liaison (16) est constituée d'au moins une bague intermédiaire (11, 23, 27, 31, 33) serrée sur le boîtier d'amortisseur dans la partie inférieure du piston déroulant en assurant l'étanchéité entre le piston déroulant (9) et le boîtier d'amortisseur (3), soutenant le piston déroulant sur le boîtier d'amortisseur (3) et étant configurée de telle sorte qu'elle reprend les forces exercées par le train de roulement radialement et perpendiculairement à la direction de l'amortissement et
**en ce que** la bague intermédiaire (23, 27, 31, 33) est fixée dans la direction axiale par des moulures ou des élargissements des composants périphériques et est constituée d'un matériau qui présente une plus grande dureté dans la partie inférieure et la partie prévue pour la liaison au soufflet en accordéon que dans la partie serrée qui assure l'étanchéité entre le piston déroulant (9) et le boîtier d'amortisseur (3).

2. Jambe d'amortisseur pneumatique selon la revendication 1, **caractérisée en ce que** le piston déroulant (9) et les parois à symétrie de rotation et au moins partiellement flexibles reliées au soufflet déroulant (8) sont reliées de manière étanche au boîtier d'amortisseur par la deuxième liaison (16).

3. Jambe d'amortisseur pneumatique selon les revendications 1 ou 2, **caractérisée en ce que** la bague intermédiaire est passée ou serrée sur le boîtier d'amortisseur et **en ce que** la partie inférieure du piston déroulant est reliée en correspondance géométrique ou en correspondance mécanique au côté extérieur de la bague intermédiaire.

4. Jambe d'amortisseur pneumatique selon la revendication 3, **caractérisée en ce que** l'extrémité inférieure du piston déroulant est reliée à la bague intermédiaire (23) par enroulement ou enfoncement d'une gorge (24).

5. Jambe d'amortisseur pneumatique selon les revendications 1 à 4, **caractérisée en ce que** la bague intermédiaire est fixée axialement par un élargissement cylindrique (28) formé sur le boîtier d'amortisseur (3) en dessous de la bague intermédiaire (27).

6. Jambe d'amortisseur pneumatique selon les revendications 1 à 5, **caractérisée en ce que** la bague intermédiaire (31) est serrée sur le boîtier d'amortisseur de manière à assurer l'étanchéité entre le piston déroulant (9) et le boîtier d'amortisseur (3) et est fixée axialement par un élargissement cylindrique (32) du boîtier d'amortisseur (3) à l'intérieur de la zone serrée assurant l'étanchéité.

7. Jambe d'amortisseur pneumatique selon les revendications 1 à 5, **caractérisée en ce que** la bague intermédiaire (33) est serrée sur le boîtier d'amortisseur en assurant l'étanchéité entre le piston déroulant (9) et le boîtier d'amortisseur (3) et est fixée axialement par une moulure cylindrique (34) du piston déroulant située entre la partie de serrage qui assure l'étanchéité et la partie inférieure prévue pour assurer la liaison avec le soufflet en accordéon.

8. Jambe d'amortisseur pneumatique selon les revendications 1 à 7, **caractérisée en ce que** l'extrémité supérieure, tournée vers la chambre de travail, de la bague intermédiaire est rendue auto-étanche en étant dotée de préférence d'une rainure périphérique (25) en forme de V et ouverte en direction de la chambre de travail.

9. Jambe d'amortisseur pneumatique selon les revendications 1 à 8, **caractérisée en ce que** le boîtier d'amortisseur est réalisé en aluminium.

10. Jambe d'amortisseur pneumatique selon la revendication 9, **caractérisée en ce qu'**une bague de soutien, de préférence en acier, est insérée dans la partie du boîtier d'amortisseur occupée par la bague intermédiaire.
